(19) Europäisches Patentamt
European Patent Office
Office européen des brevets

(11) **EP 2 713 330 A1**

(12) **EUROPEAN PATENT APPLICATION**

(43) Date of publication:
**02.04.2014 Bulletin 2014/14**

(51) Int Cl.:
***G06Q 30/02*** *(2012.01)*

(21) Application number: **12290326.3**

(22) Date of filing: **01.10.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• **Foerster, Christopher**
**70184 Stuttgart (DE)**

• **Strauss, Thomas**
**73734 Esslingen (DE)**
• **Teichmann, Karsten**
**70469 Stuttgart (DE)**

(74) Representative: **DREISS Patentanwälte PartG mbB**
**Patentanwälte**
**Gerokstrasse 1**
**70188 Stuttgart (DE)**

(54) **Method of evaluation by a booking platform**

(57) A booking platform evaluation method for evaluating a computer network (1), wherein the booking platform (2) is computer network-compatible and the computer network (1) comprises attributes (3, 8) having values in one out of a numerical domain and a Boolean domain, the method comprising steps of:
(a) providing a reference list of attributes (3, 8);
(b) searching and obtaining attribute values from the computer network (1) for each attribute (3, 8) of the reference list of attributes (3, 8);
(c) converting the obtained attribute values into numerical values; and
(d) generating an overall rating number ($S_1$) for the computer network (1) from the obtained attribute values;
a software module, provided for carrying out the steps of the method; and
a computer network-capable device for executing the method.

FIG. 3

**Description**

The invention relates to an evaluation method of a booking platform, a software module for carrying out steps of the evaluation method, and a computer network-capable device for executing the method.

BACKGROUND ART

For computer networks, booking platforms exist that have selecting tools which allow selecting networks by entering user requirements. Any evaluation of a suitability of an identified network regarding the user requirements is left to the user. The booking platforms are usually driven by a network operation which in turn means that any booking platform is optimized for the one network, and other networks are only attached. This may result in the booking platform having a preference for the network it is operated by that is not justified by a higher suitability concerning the user requirements.

DESCRIPTION

According to an exemplary embodiment of a booking platform evaluation method for evaluating a computer network, wherein the booking platform is computer network-compatible and the computer network comprises attributes having values in one out of a numerical domain and a Boolean domain, the method comprising steps of:

(a) (a user) providing a reference list of attributes;
(b) searching and obtaining attribute values from the computer network for each attribute of the reference list of attributes;
(c) converting the obtained attribute values into numerical values; and
(d) generating an overall rating number for the computer network from the obtained attribute values.

A "booking platform" as used in this application, shall be understood particularly A "Boolean domain" as used in this application, shall be understood particularly as a set consisting of the two truth values "TRUE" and "FALSE", or equivalents like "1" and "0" or "YES" and "NO".

Thus, an overall rating of a computer network regarding the attributes of the reference list of attributes can be provided which may allow a direct comparison between the evaluated network and another network.

If at least one of the attribute values is out of a Boolean domain, the attributes that are used in the evaluation method may comprise information such as tags and feature-lists of the network, thereby advantageously enabling to consider attributes of the network that are of non-numerical nature.

In a preferred embodiment, the converting of the obtained attribute values into numerical values includes applying a weighting factor to the numerical values. Thereby, it can be ensured that attribute values of different attributes are converted to a same range of numerical values to have the same effect on the overall rating number. Moreover, the effect of different attributes on the overall rating number can be adjusted if the relevance of the different attributes is judged to be different.

In another preferred embodiment, the overall rating number is a sum of the numerical values from converting the obtained attribute values. This can provide a very simple way of evaluating the computer network.

In a further preferred embodiment, steps (b), (c), and (d) are carried out for at least two computer networks, the method further comprising a step of

(e) ranking the two computer networks on the basis of the generated overall rating numbers.

Thereby, a direct and quantitative comparison of the at least two networks with regard to the reference list of attributes can be provided.

In another preferred embodiment, steps (b), (c), and (d) are carried out for a plurality of computer networks, the method further comprising steps of

(f1) calculating a maximum achievable rating number from the reference list of required attributes;
(f2) combining the attributes of any of two different computer networks, selected out of the plurality of computer networks on the basis of their overall rating numbers;
(f3) generating a combined rating number for the combined attributes of the two selected computer networks;
(f4) checking the combined rating number against the maximum achievable rating number;
(f5) if the combined rating number for the combined attributes falls short of a pre-determined percentage of the maximum achievable rating number, repeat step (f2) to step (f4) with at least one replaced computer network, selected on the basis of its overall rating number; and

(f6) if the combined rating number for the combined attributes exceeds a pre-determined percentage of the maximum achievable rating number, outputting the two selected computer networks as a booking recommendation.

Thereby, the method may enable recommending two networks that cover a larger portion of the reference list of attributes than either one of all the networks under consideration.

Preferably, if the combined rating numbers for the combined attributes fall short of the pre-determined percentage of the maximum achievable rating number for all possible combinations of two different computer networks selected out of the plurality of computer networks, steps (f2) to (f6) may be repeated with three different computer networks, selected out of the plurality of computer networks on the basis of their overall rating numbers. Thus, the chances for covering a desired portion of the reference list of attributes may be increased.

In yet another embodiment, the reference list of attributes includes at least one attribute that is characterized as a mandatory attribute, and that further includes a pre-determined range of attribute values, the method further comprising a step of (h) excluding the booking platform from an evaluation if an attribute value of the at least one mandatory attribute obtained from the computer network in step (b) is outside the pre-determined range of attribute values. Thereby, the evaluation can effectively be restricted to networks showing the mandatory attribute.

In a further embodiment, method step (b) is carried out by a search engine using at least all of the attributes of the reference list of attributes for a search. This ensures an effective search yielding a result comprising suitable candidates for the booking recommendation.

It is another aspect of the invention to provide a software module, provided for carrying out steps of any one of the above-disclosed embodiments of a booking platform evaluation method, wherein the steps are converted into a program code that is implementable in and executable by a computer network-capable device.

In yet another aspect of the invention, a computer network-capable device is provided for executing any one of the above-disclosed embodiments of a booking platform evaluation method, the device comprising:

> a modem for connecting to a computer network;
> the software module;
> a memory to implement the software module in;
> a processor to execute the program code that the software module is convertible to;
> a user interface for a user to provide the reference list of attributes.

Preferably, the modem of the computer network-capable device is a WLAN modem for wirelessly connecting to the computer network.

These and other aspects of the invention will be apparent from and elucidated with reference to the embodiments described hereinafter.

A person skilled in the art would readily recognize that steps of various above-described methods can be performed by programmed computers. Herein, some embodiments are also intended to cover program storage devices, e.g., digital data storage media, which are machine or computer-readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

BRIEF DESCRIPTION OF THE DRAWINGS

Some embodiments of apparatus and/or methods in accordance with embodiments of the present invention are now described, by way of example only, and with reference to the accompanying drawings, in which

> Fig. 1 schematically depicts a general structure of a booking platform using an evaluation method in accordance with the invention;
> Fig. 2 shows a functional block diagram of an embodiment of the method; and
> Fig. 3 schematically shows an exemplary method step of generating an overall rating number in accordance with the invention.

DETAILED DESCRIPTION

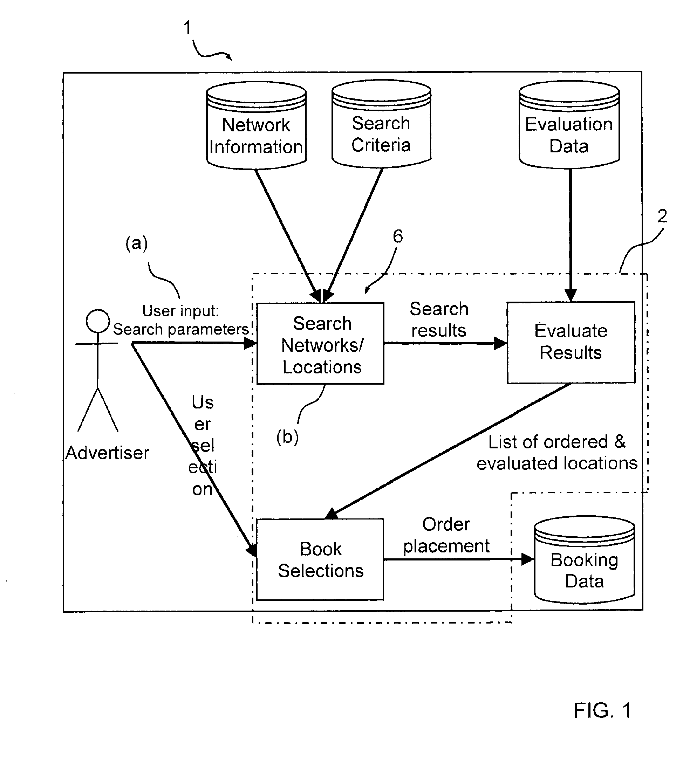

Fig. 1 schematically depicts a general structure of a computer network-compatible booking platform 2 using an evaluation method in accordance with the invention. The booking platform 2 and all steps of the evaluation method are converted into a program code that is implemented as an application software module in a memory chip of a computer network-capable device designed as a tablet computer (not shown). The tablet computer comprises a Wireless Local Area Network (WLAN) modem for wirelessly connecting to the Internet, to which a plurality of computer networks 1 is attached as well. Further, the tablet computer has a processor provided to execute the program code of the software module and a user I/O interface designed as a mouse and keyboard and a monitor, respectively, as is commonly known.

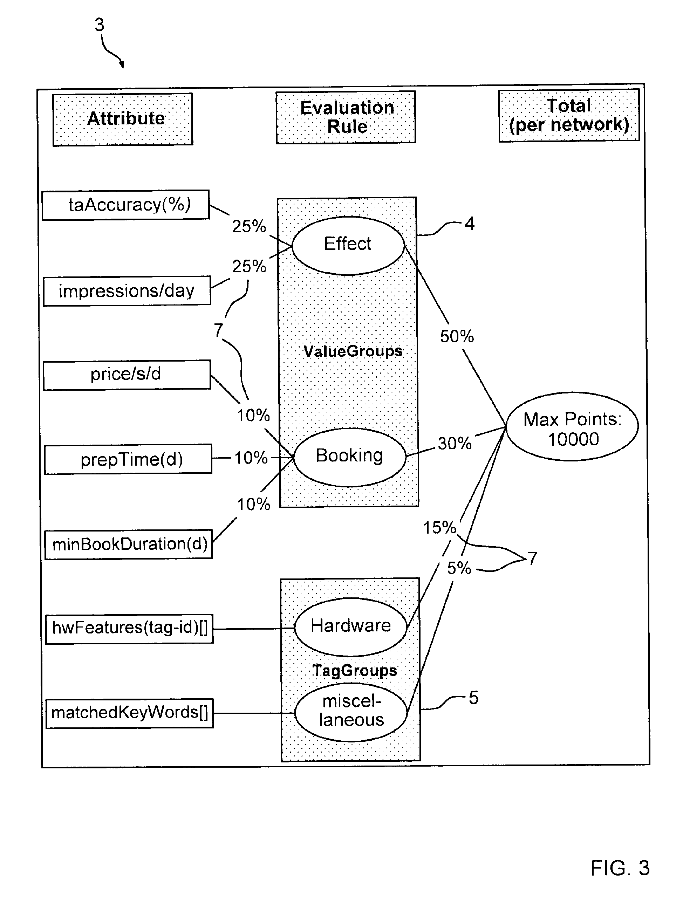

The computer networks 1 to be evaluated are designed as digital signage networks and comprise attributes 3 having values in one out of a numerical domain and a Boolean domain. In Fig. 3, the attributes 3 are shown on the left hand side, and are grouped into two categories. In the first category 4 named "ValueGroups", attributes 3 with a numerical attribute value are pooled. As an example, the attribute "price/s/d" denotes a price, so that its attribute values are numerical values. In the second category 5 named "TagGroups", attributes 3, like tags and features of feature-lists of a computer network 1, with values in a Boolean domain are pooled. As an example, "matchedKeyWords" denotes an attribute 3 that describes if a key word was found in a computer network 1 or not. Its attribute value is one of a set consisting of the two truth values "TRUE" and "FALSE" and provides a truth value for a statement of the type "the computer network 1 comprises the key word X", as will be explained in the following.

The booking platform 2 is used by the user who acts as an advertiser intending to place advertisements. To this end, the user has prepared a reference list of attributes 3 that is provided as search criteria to a search engine 6, using the user I/O interface, in step (a).

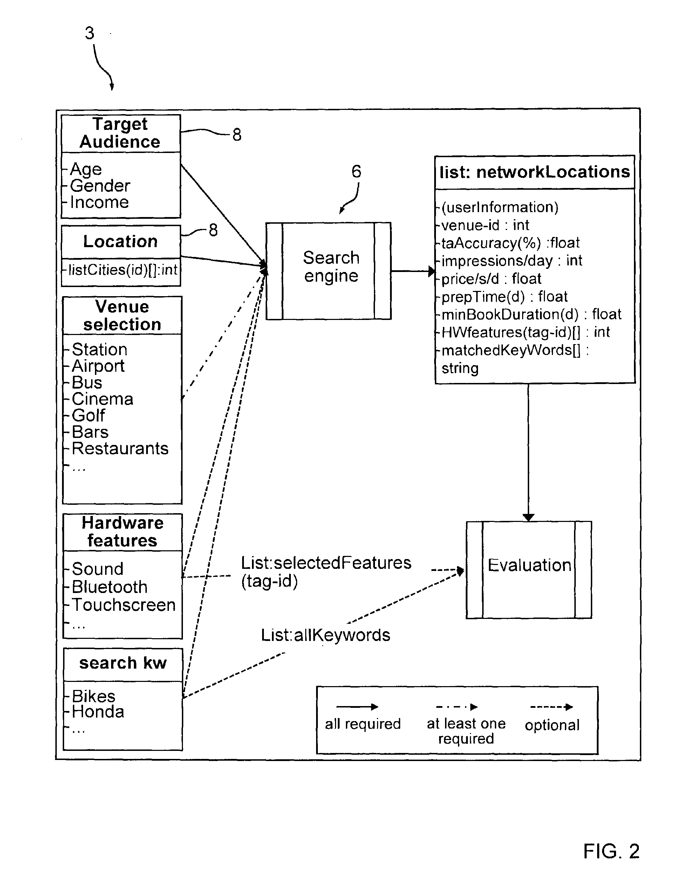

The search engine 6 carries out a step of searching and obtaining attribute values from the computer networks 1 using at least the attributes 3 of the reference list of attributes 3. This is illustrated by a functional block diagram in Fig. 2.

Items *Targeted audience* and *location* of the reference list are, as shown in Fig. 2, characterized as mandatory attributes 8 for the search, as symbolized by the black arrow. The targeted audience definition must be complete and no parameters may be missing. In addition, *Location* must contain at least one city or geographical area, and there must be at least one type of venue. As the computer network 1 is primarily defined by the location, the term "location" and the term "network" are used as synonyms henceforward.

The evaluation method further comprises a step of excluding the computer network 1 from an evaluation if an attribute value of the at least one mandatory attribute 8 obtained from the computer network 1 in step (b) is outside a pre-determined range of attribute values. The pre-determined range may be given by a single truth value but may also comprise a range that a numerical value shall lie in.

*Hardware features* and *search keywords* (kw) are completely optional. These two attributes 3 of the *"TagGroups"* pool are the only ones that are considered in both the search and the evaluation. For the search, they are intended to function as 'at-least-one' requirement, i.e. each network location must match at least one of the keywords of the reference list. The reference list is passed on for the evaluating to be carried out at a later point of time.

While the evaluation of the computer network 1 at first glance appears to be a simple matter of comparison, it induces a set of issues when dealing with complex objects such as digital signage networks, because a digital signage network consists of several attributes 3, 8 having different value types and other sub-parts. To generate an overall rating of a network, all those attributes 3, 8 have to be summarized in some way to allow for a direct comparison. An embodiment of a step of converting obtained attribute values into a numerical value is described in the following.

Attributes 3, 8 of the pool of the group *"ValueGroups"* have values that consist of numerical values and thus are easy to compare. To this end, the value of each of the attributes 3, 8 is compared with all of the values of this attribute 3, 8.

For example, the value of the attribute *"price"* (Fig. 3) is compared for all networks: While a network A has an attribute value of 5, network B of 10 and network C of 7. So, in terms of price, the ranking obviously is A - C - B, from best to worst. This ranking for each attribute 3, 8 is then used to determine a numerical value to be assigned to the network for this attribute 3, 8: the higher a rank of an attribute 3, 8, the higher the numerical value.

In the step of conversion, the following notation is used:

| | |
|---|---|
| $C$ | List of all cities selected in the search |
| $L_c$ | List of all locations in city c |
| $MS_j$ | Maximum score for attribute j |
| $mTG_G$ | Maximum score of TagGroup G |
| $min_{jc}$ | Minimum value of attribute j in city c |
| $max_{jc}$ | Maximum value of attribute j in city c |
| $pt_G$ | List of all passed tags in group G |
| $S_l$ | Score of location l |

(continued)

| $S_{tj}$ | Score of location j in attribute j |
|---|---|
| $S_{tG}$ | Score of location in group G |
| $L_{clvj}$ | Attribute j of ValueGroup v and location l in city c |

As a first sub-step, a minimum value $min_{jc}$ and a maximum value $max_{jc}$ of one of the attributes 3, 8 (attribute j) is searched. As a next sub-step, each attribute 3, 8 is assigned a percentage $P_{clvj}$ of a numerical value based on its distance from the minimum and maximum values according to:

$$P_{clvj} = \frac{\left(L_{clvj} - min_{jc}\right)}{\left(max_{jc} - min_{jc}\right)}$$

Obviously, the percentage is 0 % for $L_{clvj} = min_{jc}$ and 100 % for $L_{clvj} = max_{jc}$.
The percentage $P_{clvj}$ is then multiplied with a maximum score assigned to the respective attribute 3, 8:

$$S_{lj} = P_{clvj} \times MS_j$$

This method step ensures that numerical values of different attributes 3, 8 that might be of very different orders of magnitude are converted to the same numerical range.
The above-described assigning of a percentage holds for attributes 3, 8 for which a higher attribute value is considered to be more advantageous than a lower one (e.g. impressions/day).
For attributes 3, 8, for which a higher attribute value is considered to be less advantageous than a lower one (e.g. price), another percentage is assigned to the attribute 3, 8 according to

$$P'_{clvj} = 1 - P_{clvj}$$

Attributes 3 of the pool of the group *"TagGroups"* have values out of the Boolean domain {"TRUE", "FALSE"}. In another sub-step, a total number of tags $n_G$ within the group *"TagGroups"* is determined that have been passed on from the search engine 6 after carrying out step (b):

$$n_G = \text{count}(pt_G)$$

Then, in a next sub-step, a numerical value $S_t$ for each tag that was found by the search engine 6 is fixed by dividing the maximum score $mTG_G$ for all the attributes 3 of the group *"TagGroups"* by total number of found tags $n_G$:

$$S_t = mTG_G / n_G$$

Finally, a numerical value is assigned to each of the attributes 3 of the group "TagGroups" that is given by the product of a number of tags $n_{Gl}$ found with respect to the attribute 3 (e.g. location) and the numerical value $S_t$ for each tag that was found:

$$S_{lG} = S_t \times n_{Gl}$$

A complete evaluation is described by the following function *"Evaluate"* (pseudocode):

```
function Evaluate ()
{
```

(continued)

```
function Evaluate ()
    for each City Ci in C
    {
        for each location Lc in Ci
        {
            evaluateLocation (Lc)
        }
        sort Lc by Si top-down
    }
}
```

The function *"Evaluate"* as shown above has been separated for illustration purposes from a function *"evaluate Location"* that will be described later on. Uniting both functions is readily feasible, but the additional level of loops will make it harder to understand.

In the last line of pseudocode, the method also comprises a step of ranking the computer networks 1 on the basis of the generated overall rating numbers $S_l$. As shown in Fig. 1, results of the 1 evaluation are presented to the user as a booking recommendation for placing an order with the booking platform 2.

If all attributes 3, 8 are considered to be of same importance, the maximum score is the same for all attributes 3, 8. If some attributes 3, 8 are considered to be more important than others, the converting of the obtained attribute values into numerical values may include applying a weighting factor 7 to the numerical values. This will be described in more detail in the section "Weighting".

Weighting

The evaluation method may include a weighting option. By inputting via the I/O interface, the user can define attributes 3, 8 that are considered less important or more important than an average attribute 3, 8, thus reducing or increasing an influence the attribute 3, 8 will have in the evaluation. An exemplary distribution of weighting factors 7 is shown in Fig. 3. For an execution of the weighting option, the converting of the obtained attribute values into numerical values includes applying one of the weighting factors 7 to the numerical values. The weighting factors 7 may be stored in a database, XML or configuration file.

The distribution may need adjustment in case one of the optional attributes 3 does not exist in a current evaluation process. One way to solve this problem is to evenly distribute the free percentage among the remaining attributes 3, 8. In the example of Fig. 3, if the user did not select any hardware features, each of the remaining categories will receive an additional percentage of +5 % (15 %/3), resulting in 55 %, 35 % and 10 %. Within the group *"ValueGroups",* the maximum score is distributed evenly. This does, basically, happen within the group *"TagGroups"* as well, however, it is not visible as the calculation it is based upon is different.

```
function evaluate Locations (location Lc)
{
    set Sl = 0
    for each Group G in Lc
    {
        set SlG = 0
        if G is a 'valueGroup'
        {
            for each attribute Lclvj in Lclv
            {
            //assumme minjc and maxjc have been determined
            //already
```

$$P_{clvj} = (L_{clvj} - min_{jc}) / (max_{jc} - min_{jc})$$
$$S_{lj} = P_{clvj} \times MS_j$$
$$S_{lG} = S_{lG} + S_{lj}$$

```
            }
```

(continued)

```
function evaluate Locations (location L_c)
                }
                else
                {
                        n_G = count (pt_G)
                        n_GI = countMatches (pt_G, G)
                        S_IG = n_GI × mTG_G / n_G
                }
                S_I = S_I + SI_G
        }
}
```

The pseudocode in the listing above generates an overall rating number $S_I$ for a single location which is a sum of the numerical values from converting the obtained attribute values. It differentiates between the two categories and utilizes all the formulas that have been explained earlier. If there is a need to differentiate between more than two categories, the if-else-structure could also either be changed to a switch-case-structure or extended by further if-else conditional branches.

The following listing shows results of an executed exemplary evaluation of computer networks 1 designed as digital signage networks.

| Attribute | Impressions/day | price/day | taAccuracy | matchedTagsHW |
|---|---|---|---|---|
| max points | 2500 each | | 3000 | 2000 |
| Locations | | | | |
| Stuttgart 1 | 500 | 30,00 € | 50.00% | 1 |
| Stuttgart 2 | 400 | 50,00 € | 95,00% | 3 |
| Stuttgart 3 | 100 | 12,00 € | 10,00% | 5 |
| Algorithm variables | | | | |
| min | 100 | 12,00 € | 10,00% | 1 |
| max | 500 | 50,00 € | 95,00% | 5 |
| totatTagsHW | | | | 5 |
| Calcutation | | | | |
| Rule | $S_{Ij} = P_{clvj} \times MS_j$ | $S_{Ij} = (1 - P_{clvj}) \times MS_j$ | $S_{Ij} = P_{clvj} \times MS_j$ | $S_{IG} = n_{GI} \times \dfrac{mTG_G}{n_G}$ |
| Stuttgart 1 | 2500 | 1315,79 | 1411,76 | 400 |
| Stuttgart 2 | 1875 | 0 | 3000 | 1200 |
| Stuttgart 3 | 0 | 2500 | 0 | 2000 |
| Sum | | | | |
| Stuttgart 1 | 5627,55 | | | |
| Stuttgart 2 | 6075 | | | |
| Stuttgart 3 | 4500 | | | |

As a variation of the evaluation method, after steps (b), (c), and (d) are carried out for a plurality of computer networks 1 and an overall rating number $S_I$ is generated for them, the attributes 3, 8 of any of two different computer networks 1, selected out of the plurality of computer networks 1 on the basis of their overall rating numbers $S_I$, are

combined and submitted to the evaluation method to generate a combined rating number for the combined attributes 3, 8 of the two selected computer networks 1.

This combined rating number is then checked against the maximum achievable rating number which is 7500 or 81 % of the maximum achievable rating number in the example above. If the combined rating number for the combined attributes 3, 8 falls short of a pre-determined percentage of the maximum achievable rating number (which may be 90 %), the steps of combining two computer networks 1, wherein at least one computer network 1 is replaced, selected on the basis of its overall rating number $S_l$, generating a combined rating number, and checking the combined rating number against the maximum achievable rating number is repeated. This can be continued until all possible combinations of two different computer networks 1, selected out of the plurality of computer networks 1, are evaluated.

If a combination of two networks was found that meets the pre-determined percentage of the maximum achievable rating number, this combination would be outputted to the user as the booking recommendation.

If no combination of two networks was found that meets the pre-determined percentage of the maximum achievable rating number, the attributes 3, 8 of three different computer networks 1, selected out of the plurality of computer networks 1 on the basis of their overall rating numbers $S_l$, are combined. Steps of generating a combined rating number and checking the combined rating number against the maximum achievable rating number are repeated, thus increasing the chances for covering a desired portion of the reference list of attributes 3, 8.

While the invention has been illustrated and described in detail in the drawings and foregoing description, such illustration and description are to be considered illustrative or exemplary and not restrictive; the invention is not limited to the disclosed embodiments.

Other variations to be disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### Claims

1. A booking platform evaluation method for evaluating a computer network (1), wherein the booking platform (2) is computer network-compatible and the computer network (1) comprises attributes (3, 8) having values in one out of a numerical domain and a Boolean domain, the method comprising steps of:

   (a) providing a reference list of attributes (3, 8);
   (b) searching and obtaining attribute values from the computer network (1) for each attribute (3, 8) of the reference list of attributes (3, 8);
   (c) converting the obtained attribute values into numerical values; and
   (d) generating an overall rating number ($S_l$) for the computer network (1) from the obtained attribute values.

2. The method as claimed in claim 1, wherein at least one of the attribute values is out of a Boolean domain.

3. The method as claimed in claim 1 or 2, wherein the converting of the obtained attribute values into numerical values includes applying a weighting factor (7) to the numerical values.

4. The method as claimed in any of the preceding claims, wherein the overall rating number ($S_l$) is a sum of the numerical values from converting the obtained attribute values.

5. The method as claimed in any of the preceding claims, wherein steps (b), (c), and (d) are carried out for at least two computer networks (1), the method further comprising a step of (e) ranking the two computer networks (1) on the basis of the generated overall rating numbers ($S_l$).

6. The method as claimed in any of the preceding claims, wherein steps (b), (c), and (d) are carried out for a plurality of computer networks (1), the method further comprising steps of

   (f1) calculating a maximum achievable rating number from the reference list of required attributes;
   (f2) combining the attributes of any of two different computer networks (1), selected out of the plurality of computer networks (1) on the basis of their overall rating numbers ($S_l$);
   (f3) generating a combined rating number for the combined attributes of the two selected computer networks (1);

(f4) checking the combined rating number against the maximum achievable rating number;

(f5) if the combined rating number for the combined attributes falls short of a pre-determined percentage of the maximum achievable rating number, repeat step (f2) to step (f4) with at least one replaced computer network (1), selected on the basis of its overall rating number ($S_I$); and

(f6) if the combined rating number for the combined attributes exceeds a pre-determined percentage of the maximum achievable rating number, outputting the two selected computer networks (1) as a booking recommendation.

7. The method as claimed in claim 5, further comprising a step of (g1) if the combined rating numbers for the combined attributes fall short of the pre-determined percentage of the maximum achievable rating number for all possible combinations of two different computer networks (1) selected out of the plurality of computer networks (1), repeat steps (f2) to (f6) with three different computer networks (1), selected out of the plurality of computer networks (1) on the basis of their overall rating numbers ($S_I$).

8. The method as claimed in any of the preceding claims, wherein the reference list of attributes includes at least one attribute that is characterized as a mandatory attribute, and that further includes a pre-determined range of attribute values, the method further comprising a step of

(h) excluding the computer network (1) from an evaluation if an attribute value of the at least one mandatory attribute obtained from the computer network (1) in step (b) is outside the pre-determined range of attribute values.

9. The method as claimed in any of the preceding claims, wherein the step (b) is carried out by a search engine (6) using at least all of the attributes of the reference list of attributes for a search.

10. A software module, provided for carrying out the steps of a method as claimed in any of the preceding claims, wherein the steps are converted into a program code that is implementable in and executable by a computer network-capable device.

11. A computer network-capable device for executing the method as claimed in any of the claims 1-9, the device comprising:

a modem for connecting to a computer network (1);
the software module as claimed in claim 10;
a memory to implement the software module in;
a processor provided to execute the program code that the software module is convertible to;
a user interface for a user to provide the reference list of attributes.

12. The computer network-capable device as claimed in claim 11, wherein the modem is a WLAN modem for wirelessly connecting to the computer network (1).

FIG. 1

FIG. 2

3

| Attribute | Evaluation Rule | Total (per network) |

taAccuracy(%)

impressions/day

price/s/d

prepTime(d)

minBookDuration(d)

hwFeatures(tag-id)[]

matchedKeyWords[]

ValueGroups

Effect — 4

Booking

TagGroups

Hardware

miscel-laneous — 5

Max Points: 10000

25%
25%
7
10%
10%
10%
30%
50%
15%
5%
7

FIG. 3

**EP 2 713 330 A1**

Europäisches
Patentamt
European
Patent Office
Office européen
des brevets

# EUROPEAN SEARCH REPORT

Application Number

EP 12 29 0326

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525, ISSN: 0170-9291 * The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence was therefore considered required. * ----- | 1-12 | INV. G06Q30/02 TECHNICAL FIELDS SEARCHED (IPC) G06Q |

The present search report has been drawn up for all claims

| Place of search | Date of completion of the search | Examiner |
|---|---|---|
| The Hague | 6 March 2013 | Berlea, Alexandru |

EPO FORM 1503 03.82 (P04C01)